# EUROPEAN PATENT SPECIFICATION

(11) **EP 4 289 683 B1**
(45) Date of publication and mention of the grant of the patent: **23.10.2024**
(21) Application number: 22177756.8
(22) Date of filing: 08.06.2022
(51) Int. Cl.: B60R 21/38, F15B 15/19

(54) **A SAFETY DEVICE IN A VEHICLE**
SICHERHEITSVORRICHTUNG IN EINEM FAHRZEUG
DISPOSITIF DE SÉCURITÉ DANS UN VÉHICULE

(43) Date of publication of application: 13.12.2023
(73) Proprietor: Autoliv Development AB, 447 83 Vårgårda (SE)
(72) Inventor: ANDERSSON, Mikael, 447 83 Vårgårda (SE); RYDSMO, Erik, 447 83 Vårgårda (SE)
(74) Representative: AWA Sweden AB

(56) References cited:
- JP-A- 2008 075 739
- US-A1- 2006 218 918
- US-A1- 2018 058 481

## Description

### Technical field

The present invention refers to safety device in a vehicle.

### Technical background

It is well known in the art to use actuators in safety devices in a motor vehicle which actuators are formed by a piston that is moved from a retracted position into an extended position by gas generated by a gas generator. One example is in the use of a hood lifter to lift the hood or bonnet of a vehicle in order of providing protection for a pedestrian hit by the vehicle. It has been observed that if a motor vehicle hit a pedestrian, the bumper of the vehicle will often strike the legs or lower torso of the pedestrian. Hence, the legs of the pedestrian will normally be pushed in the direction of travel of the vehicle and the head and upper torso will normally be tilted towards the hood and windscreen of the vehicle. This tilting movement often causes the head or upper torso of the pedestrian to first make contact with the hood and thereafter, if the impact force from the hit is strong enough and the vehicle continues forward, also reach the windscreen. In order to minimize the damages of the pedestrian caused from such an impact as described above motor vehicles are often provided with so called hood lifting arrangements. These arrangements are generally constructed such that the rear part of the hood, i.e. the part closest to the windscreen, is lifted by one or more actuators. The hood will in general provide an efficient, flexible impact energy absorbing structure in the case when a vehicle hit a pedestrian. However, if the hood is not lifted, there is a higher risk that the hood will be deformed to such extent that hard, non-flexible parts beneath the hood, e.g. an engine block, make contact with the hood and an undesired, stiff impact may be the result from the collision between the pedestrian and the vehicle. In addition, the raising of the rear part of the hood will make the surface of the hood further inclined and contribute to a reduced speed of a body moving towards the windshield. In addition, a less acute angle between the wind shield and the hood will also contribute to a less severe condition for a person being hit by a vehicle.

In order of providing an efficient protection, it is essential that the lifting is made fast. It is however also a need for an easy handling of the motor vehicle after an accident, e.g. to allow it, where possible, to be driven to the nearest garage or for it to be towed in a safe manner. This requires that the hood can be pushed back manually to allow free sight from the drivers seat. This involves that the force required to push back the piston towards its retracted position should not be too high. For this purpose, it is known to have a vented gas chamber where a vent hole is arranged in the bottom end of the housing, i.e. opposite the pressure surface of the piston. There is however a problem that such venting causes an undesired leak flow of the generated gas and thereby a slower setting of the piston from the retracted position to the extracted position. There is hence a need for a in improved actuator that allows a more powerful and faster setting of the piston upon actuation of the actuator and an easy pushback. Actuators of this type may also be used in other safety systems for vehicles, such as seat belt pretensioners and also in such applications it is important to have a fast actuation.

One example of a pyrotechnic actuator according to the preamble of claim 1 is disclosed in US2006/0218918A1.

### Summary

It is an object of the present invention to provide a safety device in a vehicle that allows a faster setting of the piston from a retracted position to its fully extended position in the event of a deployment of the gas generator and hence actuation of the safety device.

Another object of the invention is to provide a safety device that allows an easy pushback of the piston towards its retracted position.

These and other objects that will be apparent from the following summary and description are achieved by a safety device in a vehicle, said safety device comprising a housing having a first end and a second end, a piston adapted to fit in the housing and being configured to be moved from a retracted position to an extended position and a gas generator, wherein
the piston has a first end forming a pressure surface facing the first end of the housing;
a gas chamber is formed between the pressure surface of the piston and an inner wall of the housing, and the gas generator is in fluid connection with the gas chamber; and wherein
the housing at its second end comprises a gas evacuation arrangement allowing gas generated by the gas generator to be evacuated from the gas chamber in a condition when the piston is situated in a full or substantially full extended position. The safety device is characterized in that the gas evacuation arrangement comprises an axially extending and radially outwardly projecting dent, the dent being configured to allow gas generated by the gas generator to axially bypass the piston in a condition when the piston is situated in said full or substantially full extended position

Accordingly, a safety device is provided in which substantially all gas generated by the gas generator upon deployment thereof will be used to force the piston to its extended position. The gas evacuation will be allowed only in a condition when the piston has reached its extended position. This gives a faster and more powerful setting of the piston to its fully extended position as compared to prior art solutions where a vent hole is arranged in the gas chamber in a bottom end of the housing opposite the pressure surface of the piston with a leaking gas flow already from the start of the gas generator's deployment. In practice, the faster setting results in an earlier protection of an item, no matter if it is a pedestrian being hit or a seat belt that should be pulled. In the event of the safety device is a seat belt pretensioner, a faster coupling of the person in the vehicle seat is provided for which in turn restricts a forward movement of the body. By the invention, the gas generated by the gas generator is allowed to escape from the gas chamber via the gas evacuation arrangement when the piston has been set to its full or substantially full extended position, and only in that position the pressure in the gas chamber will be allowed to be reduced to the same as the ambient pressure. Thus, there is no positive gas pressure that must be overcome when pushing back the piston after an actuation.

By forming the gas evacuation arrangement as a radially outwardly projecting dent, the bypass channel is only formed when the piston has been axially displaced to such extent that the piston has reached its full or substantially full extended position.

The gas evacuation arrangement may comprise a through-going opening in a side wall of the housing. The number of openings may be one, or be two or more. The more openings, the faster gas evacuation. In the event of more than one opening, the openings may be mutually displaced in the axial extension of the housing. Also, the openings may have different sizes.

The one or more openings may be arranged in an area adjacent the upper end of the housing, whereby a free passage for the generated gas is formed only when the piston has been axially displaced to such extent that the piston has reached its full, or substantially full extended position.

The through-going opening may be provided with a sealing, such as check-valve or a membrane configured to rupture by a gas pressure generated by the gas generator. By providing the opening with a sealing, it is prevented that moisture or dust is entering into the inner of the safety device over time during the ordinary use of the vehicle.

The piston may comprise a circumferential sealing ring that is arranged axially in level with the dent when the piston is situated in said full or substantially full extended position. Thereby, the volume in the vicinity of the sealing ring will add to the volume of the dent, thereby increasing the volume of the bypass channel.

The dent may have an axial extension exceeding an axial extension of the sealing ring.

The dent may in one embodiment have a circumferential extension. The dent may in an alternative embodiment have an intermittent circumferential extension or be formed a one or more discrete dent(s).

The safety device may be a hood lifter in a vehicle.

The safety device may be a seat belt pretensioner in a vehicle.

The safety device may be a seat structure reinforcer.

### Brief description of the drawings

The invention will be described in detail with reference to the schematic drawings.
Fig. 1a discloses a schematic cross section of one embodiment of a safety device during deployment of its gas generator.
Fig. 1b discloses the safety device of Fig. 1a in a condition where the piston has been moved to its full extended position.
Fig. 2 discloses a schematic cross section of a safety device, not forming part of the invention, with the gas evacuation arrangement being formed as a through-going opening.
Fig. 3 discloses a schematic cross section of a safety device according to the invention with the gas evacuation arrangement being formed as a dent in the housing.
Fig. 4 discloses a schematic cross section of a safety device according to the invention with the gas evacuation arrangement being formed as a combination of a through-going opening and a dent.
Fig. 5 discloses a schematic cross section of one embodiment of a safety device during evacuation of the gas by using the gas evacuation system according to the invention.
Fig. 6 schematically discloses the act of pushing back the piston after an actuation.

### Detailed description

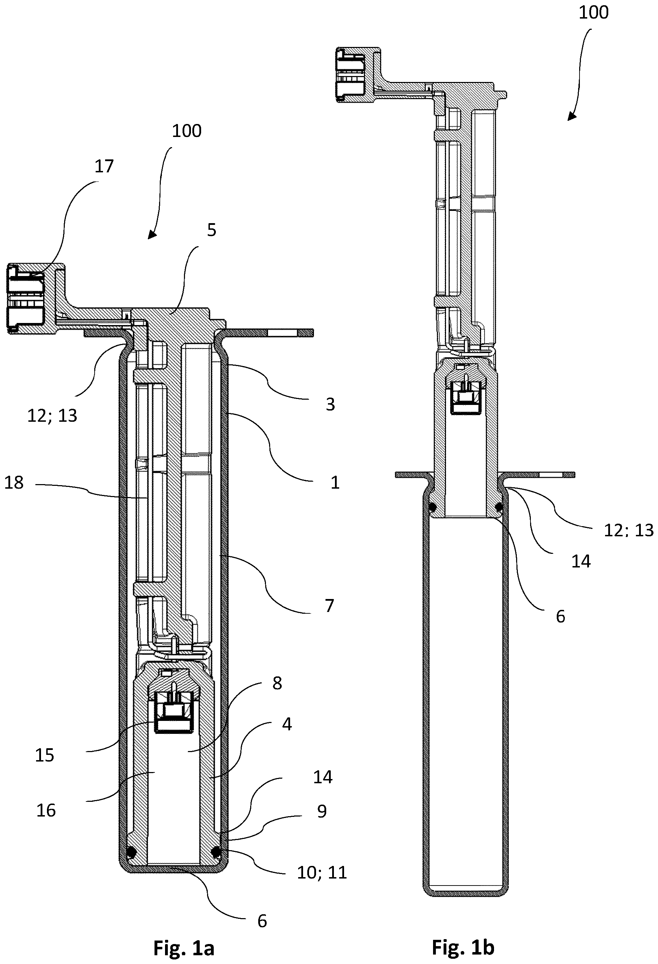

Now turning to Fig. 1a a schematic cross section of one embodiment of a safety device 100 is disclosed. The safety device 100 is disclosed with its piston in a fully retracted position.

The safety device 100 comprises a housing 1 in the form of a hollow cylinder having a first end 2 and second end 3. The housing 1 may be formed by deep drawn metallic material. The first end 2 is a closed end. The housing 1 contains a piston 4. The piston 4 is disclosed as having a portion 5 extending out from the housing 1 via the second end 3 of the housing 1. It is to be understood that the piston 4 with remained function of the invention also may be of a type where the piston 4 is fully contained in the housing 1 when the piston 4 is in its fully retracted position.

The piston 4 is fit in the housing 1. The piston 4 is axially movable inside the housing 1 from the retracted position to a full or substantially full extended position. The retracted position is the default position of the piston 4. The piston 4 has a pressure surface 6 facing the first end 2 of the housing 1. The pressure surface 6 typically has an outer cross-sectional area and an outer cross-sectional geometry that substantially corresponds to an inner cross-sectional area and inner cross-sectional geometry of the housing 1. Thereby, inner walls 7 of the housing 1 together with the pressure surface 6 of the piston 4 defines a gas chamber 8. The volume of the gas chamber 8 is variable depending on the momentary axial position of the piston 4 inside the housing 1. The gas chamber 8 has its smallest volume when the piston 4 is in its fully retracted position and its largest volume when the piston 4 is in its fully extended position.

An envelope surface 9 of the piston 4 supports a sealing ring 10 that sealingly abuts an axial portion of the inner wall 7 of the housing 1. The sealing ring 10 is received in a circumferential recess 11 in the envelope surface 9 of the piston 4.

An end portion 12 of the housing 1 adjacent the second end 3 of the housing 1 comprises a neck portion 13 having a locally reduced cross-sectional area. An edge portion 14 of the piston 4 opposite the pressure surface 6 is configured to abut said end portion 12 in a condition when the piston is set to its full extended position, see Fig. 1b. Thereby, a physical stop is formed which prevents the piston 4 from falling out of the housing 1.

The safety device 100 further comprises a gas generator 15. The gas generator 15 is situated in the gas chamber 8. The gas generator 15 is in the disclosed embodiment disclosed as being received in an axially extending recess 16 of the piston 4 and hence supported by the piston 4. In an alternative solution (not illustrated, the gas generator 15 may be arranged adjacent the first end 2 of the housing 1. Hence, the gas generator 15 must not be supported by the piston 4. No matter position of the gas generator 15, the gas chamber 8 is defined by the inner wall 7 of the housing 1, the pressure surface 6 of the piston 4 and the gas generator 15.

The gas generator 15 is directly, or indirectly connected to a schematically disclosed power connector 17. The power connector 17 is in the disclosed embodiment arranged outside the housing 1 supported by the portion 5 of the piston 4 that extends out from the housing 1. The power connector 17 is in this embodiment designed to communicate with and to power the gas generator 15 via a conductive wire arrangement 18 that extends along the axial extension of the piston 4 and hence inside the housing 1.

In the event the gas generator 15 instead should be arranged adjacent the first end 2 of the housing 1, the power connector 17 may be arranged on the first end 2 of the housing 1 and communicate with and power the gas generator 15 via an opening in the first end 2 of the housing 1.

The power connector 17 is, no matter position, configured to be connected to an Electronic Control Unit, ECU (not illustrated) of the vehicle in a manner well known in the art. In the event the ECU via a crash sensor and processor integrated in the ECU should determine that there is an emergency situation to be responded to, such as a frontal collision with a pedestrian or a bicyclist, an activation signal is communicated to an ignitor of the gas generator 15 which deploys the same. The gas generator 15 will in turn generate a gas volume having a pressure substantially higher than the ambient pressure. The gas acts on the pressure surface 6 of the piston 4 and forces the piston 4 to move in the axial direction from its retracted position to its extended position, see Fig. 1b.

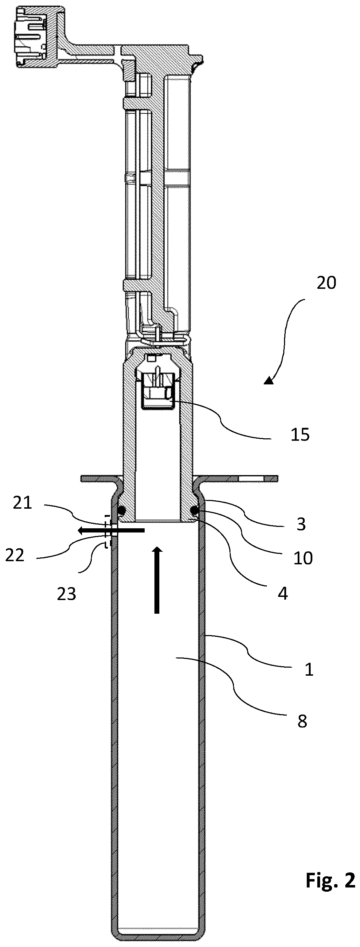

Now turning to Fig. 2, a first embodiment of the gas evacuation arrangement 20, not forming part of the invention will be discussed. The gas evacuation arrangement 20 is arranged in the second end 3 of the housing 1. The overall purpose of the gas evacuation arrangement 20 is to allow gas generated by the gas generator 15 to be evacuated from the gas chamber 8 in a condition when the gas generator has been deployed. By the gas evacuation, the gas pressure inside the gas chamber 8 will be lowered to a level corresponding to the ambient pressure. The gas evacuation arrangement 20 is arranged in an axial position in the housing 1 so that a free passage for the generated gas only is formed when the piston 4 has been axially displaced to such extent that the piston 4 has reached its full or substantially full extended position.

In the first embodiment of Fig. 2, the gas evacuation arrangement 20 is disclosed as being a through-going opening 21 arranged in a side wall 7 of the housing 1. The number of through-going openings 21 may be one, or two or more. The more openings 21, the faster gas evacuation. The one or more openings 21 are arranged in an area adjacent the second end 3 of the housing 1, whereby a free passage for the generated gas only is formed when the piston 4 has been axially displaced to such extent that the piston has reached its full or substantially full extended position. In this position, the sealing ring 10 of the piston 4 has at least partly passed the through-going opening 21, thereby allowing the gas chamber 8 to communicate with the ambience via the at least one opening 21. In the disclosed embodiment, the sealing ring 10 has fully passed the opening 21. The skilled person realizes that a passage through the opening 21 is formed when the sealing ring 10 reaches an edge portion 22 of the opening 21, and then the size of that passage will gradually increase until it corresponds the full cross-sectional area of the opening 21 as the piston 4 moves to the full extended position that is shown in Fig. 2.

In the event of two or more openings 21, these openings may be axially displaced and/or be circumferentially displaced. The more openings, the faster gas evacuation of the gas. In the event of two or more openings, the openings may have different cross-sectional areas.

The through-going opening 21 may be provided with a sealing 22. The sealing 22 is schematically illustrated by a dashed line. The sealing may be a check valve or a membrane. In the event of a membrane, the membrane is configured to rupture by the gas pressure generated by the gas generator 15. By providing the opening 21 with a sealing 22, it is prevented that moisture or dust is entering into the inner of the housing over time during the ordinary use of the vehicle.

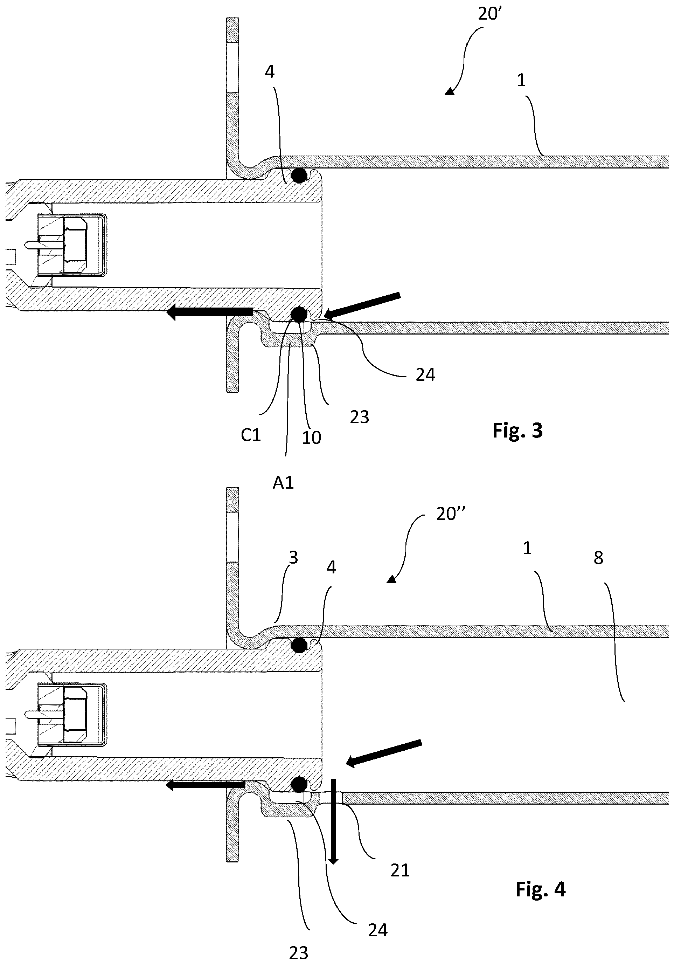

Now turning to Fig. 3, one embodiment of the gas evacuation arrangement 20' according to the invention is disclosed. The gas evacuation arrangement 20' comprises an axially extending and radially outwardly projecting dent 23. The dent 23 is configured to allow gas generated by the gas generator 15 to axially bypass the piston 4 in a condition only when the piston 4 is situated in the full or substantially full extended position.

The dent 23 has an extension in the axial direction of the housing 1 so that a bypass channel 24 is only formed when the piston 4 has been axially displaced to a full or substantially full extended position and in which position the sealing ring 10 of the piston 4 has at least partly passed the dent 23.

The circumferential sealing ring 10 of the piston 4 is preferably arranged axially in level with the dent 23 when the piston 4 is situated in said full or substantially full extended position. The dent 23 may have an axial extension exceeding an axial extension of the sealing ring 10.

The dent 23 is disclosed as one single discrete dent. In alternative embodiments, the dent may have a circumferential, continuous extension. The dent may in an alternative embodiment have an intermittent circumferential extension. Also, two or more dents may be arranged along the axial extension of the housing 1.

Now turning to Fig. 4, another embodiment according to the invention is disclosed in which the gas evacuation arrangement 20" comprises a combination of a through-going opening 21 and an axially extending and radially outwardly projecting dent 23. The opening 21 and the dent 23 are of the same type as discussed above. The 23 dent is disclosed as being arranged closer to the second end 3 of the housing 1 than the opening 21. When the piston 4 has reached its fully extended position, the generated gas in the gas chamber 8 will be allowed to be evacuated from the gas chamber both in the radial direction via the through-going opening 21 and in the axial direction via the bypass channel 24 past the dent 23. The combination of an opening 21 and a dent 23 allows a very fast gas evacuation.

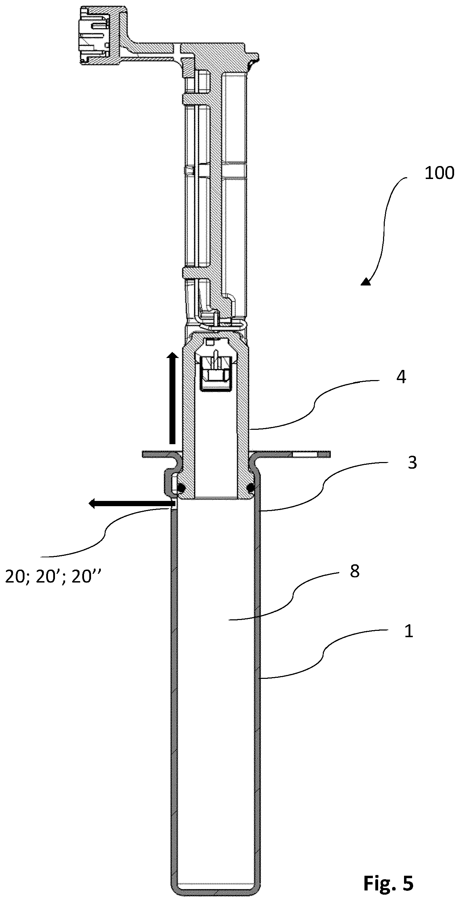

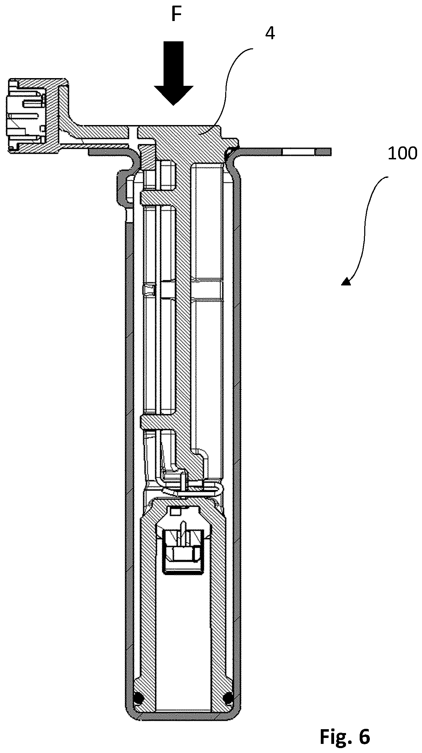

Now turning to Fig. 5 and Fig. 6. Fig. 5 discloses the safety device 100 set to its fully extended position with the gas chamber 8 filled with gas while gas is evacuated by a gas evacuation arrangement 20, 20', 22" in the second end 3 of the housing 1 just below the piston when the latter is in its full or substantially full extended position. When the internal pressure has been lowered to an extent where it substantially corresponds to the ambient pressure, the piston 4 may be pushed back to its retracted position, see Fig. 6. This is made by applying an axial pressure F to the piston 4 to thereby push it back into the housing. Since the gas has been evacuated to such extent that the pressure difference between the inside of the housing 1 has been substantially lowered, the required pressure force is very low and the pushing back can in most cases be made manually.

This is of use e.g. when the safety device is a hood lifter. The hood lifter is typically arranged in the rear and of the hood of a motor vehicle adjacent its windscreen. In the event of an accident, the hood lifter is configured to lifts the rear end of the hood to thereby protect the body of e.g. a pedestrian being hit by the vehicle. The safety device may alternatively be a seat belt pretensioner. The seat belt pretensioner may be configured to apply a pulling force to the seat belt in the event of an accident, thereby providing an early coupling of the seated body. Alternatively, the safety device may be seat structure reinforcer that provides a lifting force to a seat structure in the event of an accident.

## Claims

1. A safety device in a vehicle, said safety device comprising a housing (1) having a first end (2) and a second end (3), a piston (4) adapted to fit in the housing (1) and being configured to be moved from a retracted position to an extended position, and a gas generator (15), wherein
the piston (4) has a first end forming a pressure surface (6) facing the first end (2) of the housing (1);
a gas chamber (8) is formed between the pressure surface (6) of the piston (4) and an inner wall (7) of the housing (1), and the gas generator (15) is in fluid connection with the gas chamber (8); and wherein
the housing (1) at its second end (3) comprises a gas evacuation arrangement (20; 20'; 20") allowing gas generated by the gas generator (15) to be evacuated from the gas chamber (8) in a condition when the piston (4) is situated in a full or substantially full extended position, **characterized in that**
the gas evacuation arrangement (20; 20'; 20") comprises an axially extending and radially outwardly projecting dent (23), the dent (23) being configured to allow gas generated by the gas generator (15) to axially bypass the piston (4) in a condition when the piston (4) is situated in said full or substantially full extended position.

2. The safety device according to claim 1, wherein the piston (4) comprises a circumferential sealing ring (10), and wherein the sealing ring (10) is arranged axially in level with the dent (23) when the piston (4) is situated in said full or substantially full extended position.

3. The safety device according to claim 1 or 2, wherein the dent (23) has an axial extension exceeding an axial extension of the sealing ring (10).

4. The safety device according to any of claims 1-3, wherein the dent (23) has a circumferential extension, or wherein the dent (23) has an intermittent circumferential extension.

5. The safety device according to claim 1, wherein the gas evacuation arrangement (20; 20'; 20") comprises a through-going opening (21) in a side wall of the housing (1).

6. The safety device according to claim 5, wherein the through-going opening (21) is provided with a sealing (22), such as a check valve or a membrane configured to rupture by a gas pressure generated by the gas generator (15).

7. The safety device according to any of claims 1-6, wherein the safety device is a hood lifter in a vehicle.

8. The safety device according to any of claims 1-7, wherein the safety device is a seat belt pretensioner in a vehicle.

9. The safety device according to any of the claims 1-8, wherein the safety device is a seat structure reinforcer.

## Patentansprüche

1. Sicherheitsvorrichtung in einem Fahrzeug, die Sicherheitsvorrichtung umfassend ein Gehäuse (1), das ein erstes Ende (2) und ein zweites Ende (3) aufweist, einen Kolben (4), der angepasst ist, um in das Gehäuse (1) zu passen und konfiguriert ist, um von einer eingefahrenen Position in eine ausgefahrene Position bewegt zu werden, und einen Gasgenerator (15), wobei
der Kolben (4) ein erstes Ende aufweist, das eine Druckoberfläche (6) ausbildet, die dem ersten Ende (2) des Gehäuses (1) zugewandt ist;
eine Gaskammer (8) zwischen der Druckoberfläche (6) des Kolbens (4) und einer Innenwand (7) des Gehäuses (1) ausgebildet ist, und der Gasgenerator (15) in Fluidverbindung mit der Gaskammer (8) steht; und wobei
das Gehäuse (1) an seinem zweiten Ende (3) eine Gasevakuierungsanordnung (20; 20'; 20") umfasst, die es Gas, das mittels des Gasgenerators (15) generiert wird, ermöglicht, aus der Gaskammer (8) evakuiert zu werden, in einem Zustand, wenn sich der Kolben (4) in einer vollständig oder im Wesentlichen vollständig ausgefahrenen Position befindet,
**dadurch gekennzeichnet, dass**
die Gasevakuierungsanordnung (20; 20'; 20") eine sich axial erstreckende und radial nach außen vorstehende Delle (23) umfasst, wobei die Delle (23) konfiguriert ist, um es Gas, das mittels des Gasgenerators (15) generiert wird, zu ermöglichen, den Kolben (4) axial zu umgehen, in einem Zustand, wenn sich der Kolben (4) in der vollständig oder im Wesentlichen vollständig ausgefahrenen Position befindet.

2. Sicherheitsvorrichtung nach Anspruch 1, wobei der Kolben (4) einen umlaufenden Dichtungsring (10) umfasst, und wobei der Dichtungsring (10) auf Höhe der Delle (23) axial angeordnet ist, wenn sich der Kolben (4) in der vollständig oder im Wesentlichen vollständig ausgefahrenen Position befindet.

3. Sicherheitsvorrichtung nach Anspruch 1 oder 2, wobei die Delle (23) eine axiale Erstreckung aufweist, die eine axiale Erstreckung des Dichtungsrings (10) überschreitet.

4. Sicherheitsvorrichtung nach einem der Ansprüche 1 bis 3, wobei die Delle (23) eine umlaufende Erstreckung aufweist oder wobei die Delle (23) eine unterbrochene umlaufende Erstreckung aufweist.

5. Sicherheitsvorrichtung nach Anspruch 1, wobei die Gasevakuierungsanordnung (20; 20'; 20") eine durchgehende Öffnung (21) in einer Seitenwand des Gehäuses (1) umfasst.

6. Sicherheitsvorrichtung nach Anspruch 5, wobei die durchgehende Öffnung (21) mit einer Dichtung (22) versehen ist, wie einem Rückschlagventil oder einer Membran, die konfiguriert sind, um mittels eines Gasdrucks, der mittels des Gasgenerators (15) generiert wird, zu zerreißen.

7. Sicherheitsvorrichtung nach einem der Ansprüche 1 bis 6, wobei die Sicherheitsvorrichtung ein Motorhaubenheber in einem Fahrzeug ist.

8. Sicherheitsvorrichtung nach einem der Ansprüche 1 bis 7, wobei die Sicherheitsvorrichtung ein Sicherheitsgurtstraffer in einem Fahrzeug ist.

9. Sicherheitsvorrichtung nach einem der Ansprüche 1 bis 8, wobei die Sicherheitsvorrichtung ein Sitzstrukturverstärker ist.

## Revendications

1. Dispositif de sécurité dans un véhicule, ledit dispositif de sécurité comprenant un logement (1) ayant une première extrémité (2) et une seconde extrémité (3), un piston (4) conçu pour s'ajuster dans le logement (1) et étant conçu pour être déplacé d'une position rétractée à une position en extension, et un générateur de gaz (15), dans lequel
le piston (4) a une première extrémité formant une surface de pression (6) faisant face vers la première extrémité (2) du logement (1) ;
une chambre à gaz (8) est formée entre la surface de pression (6) du piston (4) et une paroi interne (7) du logement (1), et le générateur de gaz (15) est en communication fluidique avec la chambre à gaz (8) ; et dans lequel
le logement (1) au niveau de sa seconde extrémité (3) comprend un agencement d'évacuation de gaz (20 ; 20' ; 20") permettant à du gaz généré par le générateur de gaz (15) d'être évacué de la chambre à gaz (8) dans une condition où le piston (4) est situé dans une position d'extension complète ou sensiblement complète, **caractérisé en ce que**
l'agencement d'évacuation de gaz (20 ; 20' ; 20") comprend une bosse (23), s'étendant axialement et faisant saillie radialement vers l'extérieur, la bosse (23) étant conçue pour permettre à du gaz généré par le générateur de gaz (15) de contourner axialement le piston (4) dans une condition où le piston (4) est situé dans ladite position d'extension complète ou sensiblement complète.

2. Dispositif de sécurité selon la revendication 1, dans lequel le piston (4) comprend une bague d'étanchéité (10) circonférentielle, et dans lequel la bague d'étanchéité (10) est agencée axialement de niveau avec la bosse (23) lorsque le piston (4) est situé dans ladite position d'extension complète ou sensiblement complète.

3. Dispositif de sécurité selon la revendication 1 ou 2, dans lequel la bosse (23) a une extension axiale dépassant une extension axiale de la bague d'étanchéité (10).

4. Dispositif de sécurité selon l'une quelconque des revendications 1 à 3, dans lequel la bosse (23) a une extension circonférentielle, ou dans lequel la bosse (23) a une extension circonférentielle intermittente.

5. Dispositif de sécurité selon la revendication 1, dans lequel l'agencement d'évacuation de gaz (20 ; 20' ; 20") comprend une ouverture traversante (21) dans une paroi latérale du logement (1).

6. Dispositif de sécurité selon la revendication 5, dans lequel l'ouverture traversante (21) est pourvue d'une étanchéification (22), telle qu'un clapet antiretour ou une membrane conçue pour se rompre par une pression de gaz générée par le générateur de gaz (15).

7. Dispositif de sécurité selon l'une quelconque des revendications 1 à 6, dans lequel le dispositif de sécurité est un élément de levage de capot dans un véhicule.

8. Dispositif de sécurité selon l'une quelconque des revendications 1 à 7, dans lequel le dispositif de sécurité est un prétensionneur de ceinture de sécurité dans un véhicule.

9. Dispositif de sécurité selon l'une quelconque des revendications 1 à 8, dans lequel le dispositif de sécurité est un dispositif de renforcement de structure de siège.
